# DEMANDE DE BREVET EUROPEEN

(11) **EP 1 286 237 A1**
(43) Date de publication de la demande: **26.02.2003**
(21) Numéro de dépôt: 01810724.3
(22) Date de dépôt: 20.07.2001
(51) Int. Cl.: G05B 19/416

(54) **Procédé de commande d'un moteur**

(71) Demandeur: Valtronic S.A., 1343 Les Charbonnières (CH)
(72) Inventeur: Scheidegger, Michael, 1400 Yverdon (CH); Chenuz, Jean-Marc, 1329 Mont-la-ville (CH)
(74) Mandataire: Gresset, Jean

(57) **Abrégé**

L'invention concerne un procédé de commande d'un moteur à courant continu (10), alimenté par un dispositif de commande (14) comportant:
- un détecteur de position (30, 32) coopérant avec le rotor du moteur,
- un circuit d'alimentation (34) pour appliquer une tension d'alimentation aux bornes des bobines du moteur et destinée à engendrer le courant électrique, et
- un circuit de commande (36).

Ce procédé est destiné à commander le moteur pour mouvoir un organe mobile (24), en vue d'atteindre une position cible Pc définie par un nombre de pas d_{c} à parcourir.

Durant une phase dite de positionnement, le circuit de commande (36), après avoir constaté que la position cible P_{c} a été atteinte, interrompt le courant alimentant les bobines et leur applique une impulsion (I_{f}) de polarité inverse, puis les court-circuite jusqu'à l'arrêt constaté par le détecteur (30, 32).

## Description

La présente invention concerne un procédé de commande d'un moteur à courant continu du type comportant un rotor et un stator, un ensemble de bobines et un circuit magnétique, l'un solidaire du rotor, l'autre du stator, le rotor étant entraîné en rotation par le passage d'un courant électrique dans les bobines. Ce moteur est alimenté par un dispositif de commande comportant:
- un détecteur de position coopérant avec le rotor,
- un circuit d'alimentation pour appliquer aux bornes des bobines une tension d'alimentation destinée à engendrer le courant électrique, et
- un circuit de commande.

Le procédé selon l'invention permet à un organe mobile, mû par le moteur et dont le mouvement est mesuré par le détecteur, d'atteindre une position cible P_{c} définie par un nombre de pas d_{c} à parcourir.

De tels moteurs, commandés selon le procédé ci-dessus, permettent de déplacer l'organe mobile avec plus ou moins de précision, celle-ci dépendant du mode de travail du circuit d'alimentation, ainsi que de l'élasticité de l'ensemble compris entre le rotor et l'organe mobile, laquelle peut provoquer un recul du rotor de plusieurs pas après que l'alimentation a été interrompue. Ce recul signifie que, même si le rotor a parcouru un angle correspondant au nombre de pas d_{c} nécessaires pour atteindre la position cible P_{c}, cette dernière n'a effectivement pas été atteinte. Il faut donc prendre en compte ce recul.

Le but de la présente invention est de proposer un procédé assurant une précision élevée du positionnement de l'organe, même en cas de recul, pour un coût aussi faible que possible. Ce but est atteint grâce au fait que, durant une phase dite de positionnement, le circuit de commande, après avoir constaté que la position cible P_{c} a été atteinte, interrompt le courant et applique aux bobines une impulsion de freinage de polarité inverse, puis court-circuite les bobines jusqu'à l'arrêt constaté par le détecteur.

De manière avantageuse, le circuit de commande effectue les opérations suivantes durant cette phase de positionnement:
- détermination du nombre de pas à parcourir pour atteindre la position cible P_{c} ;
- détermination du nombre de pas parcourus par l'application d'une impulsion de positionnement dispensant une énergie connue ;
- détermination des énergies motrice et de freinage à fournir respectivement par une impulsion de positionnement et par une impulsion de freinage pour atteindre la position cible P_{c} ; et
- commande du circuit d'alimentation pour qu'il applique au moteur les impulsions de positionnement et de freinage déterminées.

En combinant l'application d'une impulsion de positionnement calibrée, puis d'une impulsion de freinage, il est possible de prendre au mieux en compte les fluctuations du couple prélevé par le rotor et l'organe mobile, et garantir une approche optimale.

Cette approche peut encore être améliorée en déterminant les énergies des impulsions de positionnement et de freinage en fonction des essais effectués antérieurement, notamment en sélectionnant, parmi un ensemble de solutions alternatives enregistrées en mémoire, celle présentant la plus grande probabilité de succès.

Les opérations effectuées durant la phase de positionnement peuvent être répétées, la sélection des impulsions de positionnement et de freinage étant modifiée en fonction du résultat obtenu, jusqu'à atteindre la position cible P_{c}.

Il est évident que le procédé tel que décrit permet certes un positionnement précis, mais à faible vitesse. Dès lors que le nombre de pas à effectuer dépasse quelques dizaines, il est souhaitable d'appliquer une procédure permettant de travailler avec une plus grande vitesse, sans pour autant perdre de la précision exigée. C'est pourquoi, durant une phase dite d'approche, le circuit de commande effectue les opérations suivantes, après que le détecteur a informé que l'organe est immobile:
- détermination la position de l'organe mobile, en référence à la position cible P_{c} ;
- application d'une impulsion dont l'énergie est connue ;
- court-circuit des bobines jusqu'à l'arrêt de l'organe ;
- détermination la nouvelle position de l'organe ;
- calcul du nombre de pas effectués par l'organe sous l'effet de l'impulsion appliquée ;
- calcul de l'énergie devant être fournie pour permettre à l'organe d'atteindre la position cible P_{c} ;
- application d'une impulsion dont l'énergie est plus petite que - ou égale à - celle calculée,
- court-circuit des bobines jusqu'à immobilité de l'organe ; et
- si le détecteur indique un passage par la position cible, application de la procédure de la phase de positionnement, sinon reprise de la procédure de la phase d'approche.

La phase de positionnement et la phase d'approche se font de manière itérative, avec un déplacement suivi d'un arrêt durant lequel l'effet des impulsions appliquées est analysé. De la sorte, les calculs sont effectués lorsque le rotor est arrêté, ce qui permet de réduire le puissance de calcul du circuit de commande, lequel est généralement réalisé au moyen d'un microcontrôleur.

Lorsque l'organe mobile doit parcourir une distance correspondant à plusieurs centaines, voire plusieurs milliers de pas, il est nécessaire de pouvoir faire tourner le moteur en continu. Aussi, préalablement à la phase d'approche et dans la mesure où le nombre de pas à effectuer pour atteindre la position cible est supérieur à une valeur limite d_{I}, le circuit de commande donne l'ordre au circuit d'alimentation d'alimenter le rotor en continu, à une tension calibrée U₁, et compte le nombre de pas parcourus sur la base des informations recueillies par le détecteur.

Afin d'arrêter l'alimentation en continu du rotor, après que le détecteur aie déterminé que sa vitesse est constante, le circuit de commande calcule, à partir de la vitesse atteinte, le nombre de pas susceptibles d'être parcourus par l'organe avant qu'il ne s'arrête lorsque l'alimentation est interrompue et que les bobines sont court-circuitées, puis interrompt l'alimentation et court-circuite les bobines lorsque le nombre de pas restant à parcourir atteint une valeur égale au nombre calculé, éventuellement augmenté d'un paramètre de sécurité.

Par ailleurs, lorsque le nombre de pas à effectuer est particulièrement important, supérieur à une valeur limite d₀, le circuit de commande donne l'ordre au circuit d'alimentation d'alimenter le moteur à une tension maximale U₀, supérieure à U₁ et qui peut être celle de la source d'énergie, et se limite à compter le nombre de pas parcourus, puis, lorsque le nombre de pas restant à parcourir est égal à une valeur limite définie en fonction de d₀, le circuit de commande amène la tension d'alimentation à une valeur égale à U₁.

D'autres avantages et caractéristiques de l'invention ressortiront de la description qui va suivre, faite en regard du dessin annexé, dans lequel:
- la figure 1 représente un schéma de principe d'un appareillage agencé pour mettre en oeuvre le procédé selon l'invention,
- la figure 2 montre, de manière schématique, la manière dont procède l'appareillage de la figure 1, et
- les figures 3 et 4 sont des organigrammes des programmes mis en oeuvre dans l'appareillage de la figure 1.

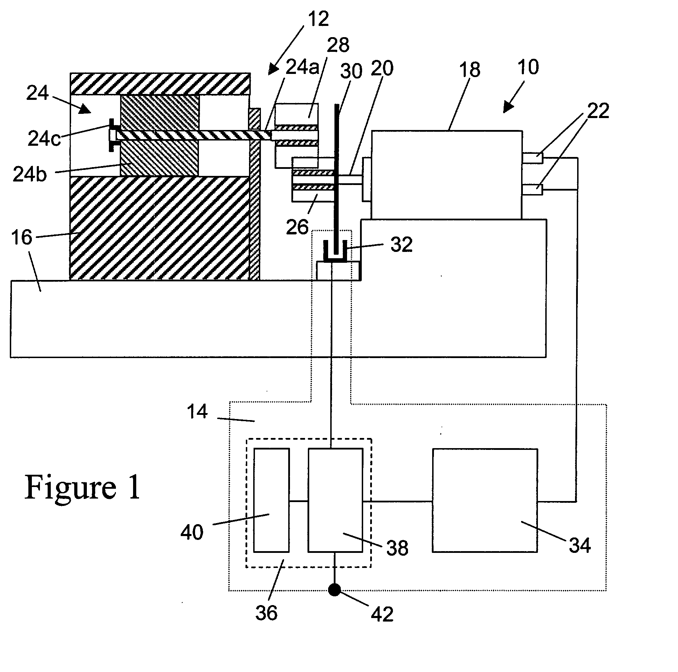

L'appareillage représenté à la figure 1 est destiné à commander le déplacement du piston d'une seringue de dosage d'un liquide, non représentée au dessin. Il comporte un moteur 10, un outil 12 destiné à être mobilisé par le moteur 10, un dispositif de commande 14 du moteur 10, un bâti 16 sur lequel sont montés le moteur 10, l'outil 12 et le dispositif de commande 14, et une source d'énergie électrique qui n'a pas été représentée au dessin pour éviter de le surcharger.

Le moteur 10 est de type à courant continu, bien connu de l'homme du métier, avec un rotor et un stator associés à des bobines (qui ne sont pas visibles sur cette figure), logés dans un boîtier 18, lequel est fixé sur le bâti 16. Le moteur comporte un arbre 20 entraîné en rotation par le rotor, et deux bornes d'alimentation 22 permettant de le relier au dispositif de commande 14.

L'outil 12 comprend une vis sans fin 24 formée d'une tige filetée 24a et d'un écrou 24b, lesquels sont, respectivement et de manière classique, montés mobiles en rotation et en translation sur le bâti 16. Il comprend, en outre, un engrenage formé d'une roue menante 26, fixée sur l'arbre 20, et d'une roue menée 28, solidaire de la tige 24a. L'écrou 24b porte une pièce d'accrochage 24c, destinée à coopérer avec le piston de la seringue (qui n'apparaît pas au dessin), ceux-ci formant ensemble un organe mobile.

Typiquement, la tige 24a comprend entre cinquante et cent spires, et l'écrou 24b une vingtaine environ. En d'autres termes, le moteur doit entraîner la tige 24a sur trente à quatre-vingt tours pour que l'écrou 24b passe de l'une à l'autre de ses positions extrêmes.

Le dispositif de commande 14 comporte un détecteur de position, formé d'une roue codeuse 30 fixée à l'arbre 20 et d'un capteur optique 32 en quadrature, monté sur le bâti 16 de manière à coopérer avec la roue codeuse 30. Il comporte, en outre, un circuit d'alimentation 34 pour appliquer la tension d'alimentation aux bornes 22 des bobines, et un circuit de commande 36, agencé pour recevoir des informations du capteur 32 et pour adresser des ordres au circuit d'alimentation 34.

La roue codeuse 30 et le capteur optique 32 sont agencés de manière à permettre de repérer plusieurs dizaines de positions, typiquement soixante par tour de la roue 30. A cause du rapport d'engrenages des roues 26 et 28, qui dans l'exemple est de 3, il est possible de définir quelque cents quatre-vingt pas par spire de la tige 24a.

Le circuit d'alimentation 34 est réalisé au moyen d'un pont en H, de manière à fournir au moteur la puissance nécessaire et à pouvoir inverser la polarité de son alimentation, ce qui permet de faire tourner son rotor dans les deux sens.

Le circuit de commande 36 comporte essentiellement un microcontrôleur 38, une mémoire 40 et une borne de commande 42, permettant de communiquer avec un ordinateur extérieur pour adresser des ordres au microcontrôleur 38, introduire un programme ou lire le contenu de la mémoire 40. La borne de commande pourrait aussi être un simple bouton-poussoir permettant de commander la mise en route du processus.

La mémoire 40 contient, de manière permanente ou reprogrammable, un ensemble de paramètres caractéristiques de l'appareillage représenté sur la figure 1, qui seront précisés ci-dessous.

Un circuit de stabilisation de la tension peut avantageusement être intercalé entre la source d'énergie et le circuit de commande 36, pour en garantir le bon fonctionnement, spécialement si la tension et la résistance interne de la source d'énergie fluctuent beaucoup, ce qui peut être le cas lorsque cette source est une batterie rechargeable.

Pour bien comprendre le procédé mis en oeuvre dans l'appareillage décrit, il faut savoir qu'en entraînant en rotation le rotor d'un moteur à courant continu, le couple à appliquer varie en fonction de la position angulaire, mais de manière moins marquée qu'avec un moteur de type pas-à-pas. Cela a pour avantage de permettre l'arrêt du rotor dans des positions intermédiaires. Il est, par contre, impossible de prédire avec précision la quantité d'énergie à fournir pour faire avancer de un pas la roue codeuse 30 et, avec elle, l'organe mobile.

En d'autres termes, il n'y a plus proportionnalité entre tension d'alimentation et vitesse, spécialement lorsque cette dernière est faible. Par ailleurs, l'énergie à fournir au piston peut varier considérablement d'une application à l'autre, fonction de la seringue utilisée et du liquide à dispenser.

Pour assurer la fonction qui lui incombe, l'appareillage tel que décrit doit être rapide, précis et économique. La rapidité est obtenue en faisant travailler le moteur à grande vitesse lorsque le chemin à parcourir est long. La précision est garantie par le mode de commande mis en oeuvre lorsque la cible à atteindre est proche. Enfin, le faible coût provient du fait que le moteur à courant continu est économique, notamment à cause des très grandes quantités fabriquées, et que le programme appliqué ne nécessite pas une puissance de calcul élevée.

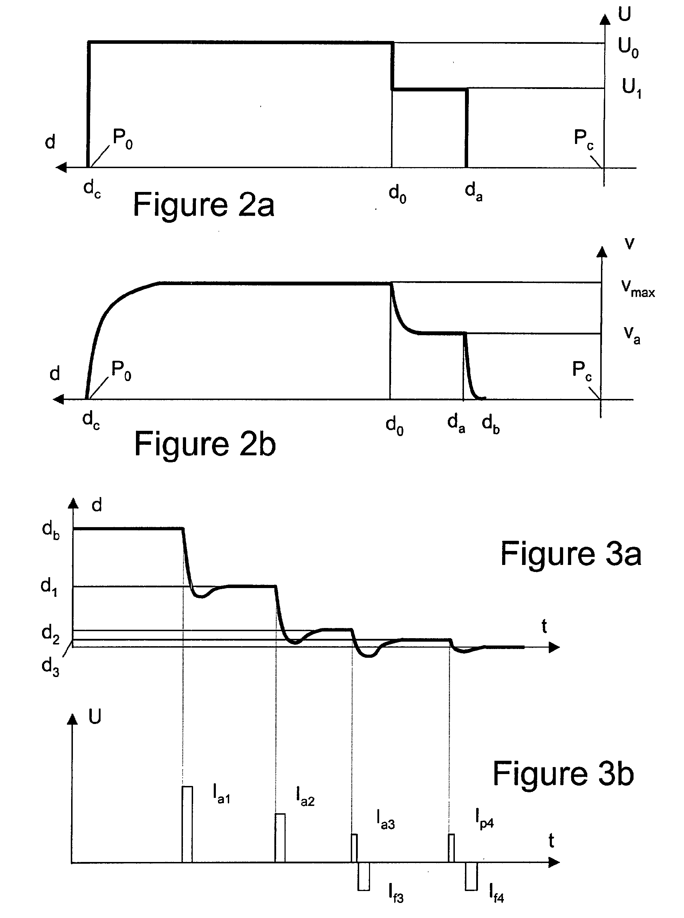

Le procédé mis en oeuvre pour la commande de l'appareillage décrit comporte deux modes de fonctionnement bien distincts, respectivement représentés schématiquement sur les figures 2 et 3. Le premier mode est caractérisé par une rotation continue du moteur, avec une première phase, rapide, et une seconde, contrôlée. Le second mode est caractérisé par une avance par impulsions, avec une première phase, d'approche, et une seconde, de positionnement. Ces modes seront décrits dans leur principe avant que ne soient expliqués les organigrammes des programmes mis en oeuvre par le microcontrôleur 38 pour commander le moteur 10.

La figure 2 montre comment varient, en a, la tension d'alimentation U et, en b, la vitesse du rotor v, en fonction du nombre de pas d restant à effectuer, de la position de départ P₀, jusqu'à la position cible P_{c}, située à l'origine du système de coordonnées.

Pour que l'appareillage puisse fonctionner, il faut, bien sûr, que le microcontrôleur 38 puisse accéder à son programme de commande, lequel doit donc être enregistré dans la mémoire 40. Cette dernière contient, en outre et programmés de manière permanente ou reprogrammable, des paramètres relatifs à l'alimentation du moteur. Un premier ensemble de paramètres correspond à des valeurs limites relatives aux changements à apporter dans le mode d'alimentation, comme cela sera expliqué plus loin, et un second ensemble de paramètres définit plus particulièrement la manière d'alimenter le moteur durant la phase permettant de positionner le rotor en vue d'atteindre la position cible avec le maximum de précision.

L'initialisation de l'appareillage consiste à placer l'écrou 24b à l'une ou l'autre des positions extrêmes de la tige 24a, selon que la seringue doit aspirer ou dispenser du liquide, à fixer le piston à la pièce d'accrochage 24c et à introduire dans la mémoire 40 le nombre de pas d_{c} que le moteur doit effectuer pour assurer sa fonction, soit atteindre la position cible P_{c}.

Lorsque le microcontrôleur 38 constate que le nombre de pas à effectuer d_{c} dépasse une valeur limite d₀ faisant partie du premier ensemble des paramètres enregistrés dans la mémoire 40, laquelle est typiquement égale à huit cents, il donne l'ordre au circuit d'alimentation 34 d'appliquer aux bornes 22 du moteur une tension U₀ proche de celle U de la source d'énergie. Ainsi qu'on peut le voir sur la figure 2b, la vitesse v du rotor va alors croissante jusqu'à atteindre une vitesse limite vₘₐₓ.

L'appareillage travaille ainsi en phase rapide, dans le mode d'alimentation en continu.

Dès la mise en mouvement du moteur 10, le microcontrôleur 38 décrémente la valeur d, contenue dans la mémoire 40, à partir des informations reçues du capteur optique 32. Quand d correspond à d₀, le microcontrôleur 38 donne l'ordre de réduire la tension d'alimentation à une valeur U₁. Cette tension U₁, plus petite que U₀, est obtenue par hachage de la tension d'alimentation U, le rapport entre les temps où la tension est égale à U et les temps où elle est nulle définit la tension U₁.

L'appareillage est ainsi passé de la phase rapide à la phase contrôlée.

A cause de ce changement de la tension d'alimentation, le moteur ralentit fortement, pour atteindre une vitesse réduite vₐ. Lorsque celle-ci est stabilisée, le microcontrôleur 38 calcule le nombre de pas N nécessaire pour que le rotor s'arrête, les bobines étant en court-circuit. N peut être défini à partir de la vitesse vₐ, dès lors que la tension d'alimentation U₁ est constante, par calcul ou au moyen de tables de comparaison enregistrées dans la mémoire 40.

La tension U₁ est choisie de manière à ce que l'opération de décrémentation puisse se faire par le microcontrôleur 38 en alternance avec le calcul de N, et que cette dernière valeur ne soit pas trop importante, pour assurer une bonne maîtrise de l'arrêt du rotor, comme cela sera expliqué plus loin.

La valeur N peut avantageusement être ajustée de manière à prendre en compte un coefficient de sécurité garantissant que le rotor ne s'arrêtera pas au-delà de la position cible P_{c}. Pour s'assurer que la vitesse est stabilisée, le microcontrôleur 38 peut comparer le nombre de pas parcourus dans des intervalles de temps égaux. Il peut aussi, plus simplement, attendre un temps suffisamment long pour être certain que la décélération est terminée.

La tension U₁ est interrompue au moment où d atteint une valeur dₐ égale à N. Les bobines du moteur 10 sont alors mises en court-circuit et le moteur ralentit progressivement jusqu'à s'arrêter en d_{b}. La pratique a montré que les différentes variables évoquées plus haut font que l'arrêt se produit généralement entre 5 et 30 pas de la position cible P_{c}. Lorsque le moteur est arrêté, le microcontrôleur 38 passe alors au deuxième mode de commande, par impulsions, illustré sur la figure 3.

La figure 3 montre, en fonction du temps cette fois, en a, le nombre de pas d restant à parcourir pour atteindre la position cible P_{c} et, en b, la tension de commande U appliquée sous forme d'impulsions I pour atteindre cette position.

Le moteur étant arrêté, le microcontrôleur 38 calcule, en fonction de la valeur d_{b}, l'énergie Eₐ₁ qu'une impulsion devrait fournir au rotor pour lui permettre d'atteindre la position cible P_{c} ou de s'arrêter en de-çà. Le moteur reçoit ainsi une impulsion Iₐ₁ appliquant au rotor l'énergie Eₐ₁, ce qui le fait passer de la position d_{b} à la position d₁ en un mouvement amorti pouvant se terminer par un recul typiquement compris entre 1 et 3 pas. Ce recul est fortement exagéré sur le dessin.

Dès l'impulsion terminée, les bobines sont court-circuitées pour amortir le plus rapidement possible les oscillations du rotor. Dans l'exemple représenté à la figure 3, une deuxième impulsion Iₐ₂, dont l'énergie fournie Eₐ₂ est définie de la même façon que Eₐ₁. Eₐ₂ est inférieure à Eₐ₁ dès lors que le chemin restant à parcourir est plus court. Eₐ₂ est appliquée au moteur, la position mesurée passant alors de d₁ à d₂.

L'énergie Eₐ₃ de l'impulsion suivante lₐ₃ est telle que le rotor atteint la position cible P_{c}, confondue avec l'origine de l'axe des ordonnées. Le microcontrôleur 38 adresse alors une impulsion I_{f3}, de polarité inverse et d'énergie E_{f3}, qui bloque le rotor et peut même le faire reculer. Dès l'impulsion I_{f3} terminée, les bobines sont mises en court-circuit, de manière à freiner le moteur au maximum. Malgré cela, et à cause des forces élastiques en présence, il se peut que le rotor recule de un ou plusieurs pas, atteignant la position d₃. Au cours de cette dernière opération, le microcontrôleur 38 est passé de la phase d'approche à la phase de positionnement, caractérisée par l'application systématique d'une impulsion de freinage I_{f} après chaque impulsion motrice de positionnement Iₚ.

Si la cible n'a pas été atteinte de manière stable, comme représenté au dessin, le microcontrôleur 38 effectue une nouvelle tentative, en appliquant une impulsion motrice Iₚ₄, d'énergie Eₚ₄, suivie d'une impulsion I_{f4} d'énergie E_{f4}, les caractéristiques de Iₚ₄ et I_{f4} étant choisies parmi un ensemble de données, faisant partie des seconds paramètres se trouvant dans la mémoire 40 et présentant la plus grande probabilité d'atteindre la position cible P_{c}, en fonction du nombre de pas parcourus sous l'effet des impulsions Iₐ₃ et I_{f3}.

Cette opération peut être répétée plusieurs fois, avec un nouvel ajustement des paramètres. Après chaque nouvelle impulsion de freinage I_{f}, les bobines sont court-circuitées pendant quelques secondes, de manière à ce que le rotor soit bloqué et que les différentes pièces mobiles aient pu atteindre leur position de repos.

Ainsi, grâce à cette stratégie, il est possible de garantir un déplacement précis du piston, malgré les forces élastiques en présence.

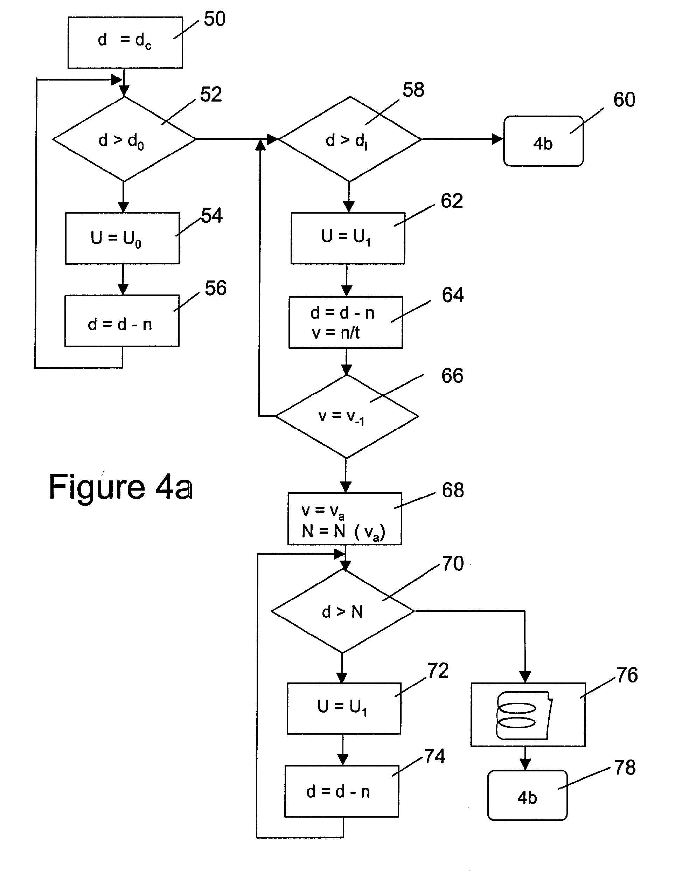

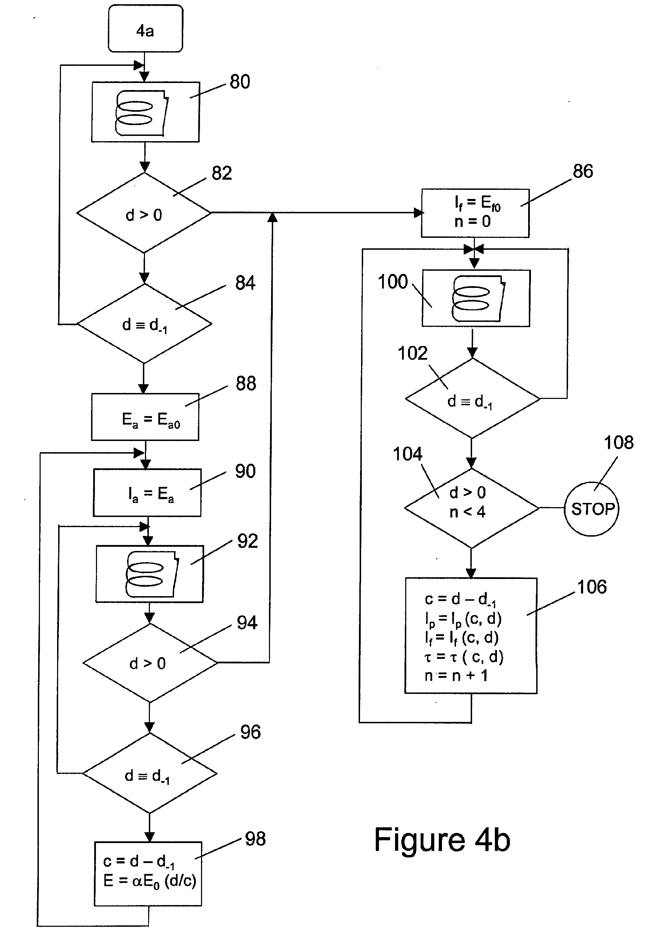

La figure 4 représente l'organigramme du programme mis en application par le microcontrôleur 38 pour assurer la commande du moteur 10, la partie se rapportant au mode de fonctionnement en continu étant représentée en a, celle concernant le mode de fonctionnement par impulsions en b. Sur cette figure, et pour toutes les opérations de contrôle, une réponse positive correspond à une sortie verticale et une réponse négative à une sortie horizontale.

Le microcontrôleur 38 initialise en 50 le processus, en mémorisant le nombre de pas d_{c} à effectuer dans la mémoire 40, lequel sera décrémenté, à partir des impulsions provenant du capteur optique 32, pour donner la valeur instantanée d du nombre de pas restant à effectuer jusqu'à atteindre la position cible P_{c}. Il vérifie en 52 que d_{c} est supérieur à la valeur limite d₀. Si tel est le cas, en 54, la tension U₀ est appliquée en continu au circuit 34, et en 56 la valeur d est décrémentée du nombre de pas n comptés par le capteur optique 32. L'appareillage travaille ainsi en phase rapide, la tâche du microcontrôleur se limitant à décrémenter d et à vérifier que d₀ n'a pas été atteint. Le microcontrôleur 38 recommence en 52, jusqu'à ce que le nombre de pas restant à effectuer d soit plus petit ou égal à d₀.

Lorsqu'il en est ainsi, les fonctions définies en 54 et 56 ayant ou non été appliquées, le programme passe en 58 où il détermine si le nombre de pas d restant à effectuer est supérieur à une valeur limite d_{I} en dessous de laquelle le programme passe en mode par impulsions en 60, décrit en référence à la figure 4b. La valeur de d_{I} correspond au nombre de pas indispensable pour assurer une commande maîtrisée en mode d'alimentation en continu. Cette situation ne se produit que lorsque le nombre total de pas à effectuer est très faible, soit inférieur à d_{I}, dont la valeur est de quelques dizaines de pas au maximum.

Si le nombre de pas restant à franchir est suffisant, le circuit de commande 36 passe en phase contrôlée, en amenant en 62 la tension d'alimentation à U₁, par hachage de la tension nominale et en poursuivant la décrémentation du compteur de pas en 64, tout en déterminant la vitesse instantanée v, égale au rapport entre le nombre n de pas parcourus entre deux mesures, soit d₋₁ - d, et le temps t nécessaire pour les parcourir. Il vérifie ensuite en 66 si la vitesse a atteint un régime constant. Tant que la réponse est négative, un nouveau cycle recommence en 58.

Il est aussi possible de se contenter d'une mesure du temps écoulé depuis le passage en phase contrôlée, le temps limite étant choisi de manière à ce que l'appareillage ait atteint un régime de fonctionnement stable.

Lorsque la vitesse est stable, le microcontrôleur 38, en 68, mémorise la vitesse stable vₐ et détermine, en fonction de cette dernière, le nombre N de pas nécessaires pour permettre l'arrêt de l'appareillage à la position cible ou avant. Cette valeur est définie comme limite de d pour l'entraînement en mode d'alimentation continue. Le microcontrôleur 38 vérifie ensuite en 70 que le nombre de pas restant d est supérieur à N. Tant que c'est le cas, la tension d'alimentation est maintenue à la valeur U₁ en 72 et le compteur de pas est décrémenté en 74.

Lorsque cette valeur limite N est atteinte, la bobine d'alimentation est mise en court-circuit en 76, puis le programme se poursuit en mode par impulsions en 78. Les opérations suivantes sont décrites en référence à la figure 4b.

Dans le mode par impulsions, une première phase, dite d'approche, permet d'approcher la position cible P_{c}, et une seconde phase, dite de positionnement, de positionner l'appareillage sur la position cible ou sur une position très voisine.

La première phase débute par la poursuite de la mise en court-circuit de la bobine, comme indiqué en 80. Durant ce temps, le microcontrôleur 38 vérifie en 82 que la position cible P_{c} n'est pas atteinte, et en 84 que la roue 30 est arrêtée. Tant que la position cible n'est pas atteinte et que la roue tourne, le court-circuit est maintenu. Si, à ce stade déjà, la position cible P_{c} était atteinte, le programme se poursuivrait en 86, comme cela sera expliqué plus loin.

Si la position cible P_{c} n'est pas atteinte, le microcontrôleur 38 définit en 88 l'énergie Eₐ à fournir au rotor, égale à une valeur calibrée Eₐₒ, puis donne, en 90, l'ordre au circuit d'alimentation d'appliquer au rotor une impulsion Iₐ d'énergie égale à Eₐ. Dès l'impulsion terminée, la bobine est mise en court-circuit en 92, le microcontrôleur 38 vérifie que la position cible P_{c} n'est pas atteinte en 94, puis que la roue 30 est arrêtée en 96. Dès que la position P_{c} est atteinte, le programme se poursuit en 86. Tant que ce n'est pas le cas, et dès que la roue 30 est arrêté, le microcontrôleur 38 calcule, en 98, une valeur c égale au nombre de pas d - d₋₁ parcourus sous l'effet de l'impulsion Iₐ et une valeur E égale à la valeur Eₐ₀ multipliée par le rapport d/c et par un coefficient de sécurité α plus petit ou égal à 1, choisi de manière à éviter que l'énergie fournie n'amène à un dépassement hors norme de la position cible P_{c}. Lorsque le nombre de pas restants est inférieur à 5, α est égal à 1. Le programme reprend ensuite en 90.

Au moment où la roue 30 passe par la position cible P_{c}, détectée en 82 ou en 94, le microcontrôleur 38 initialise un nombre n = 0, correspondant au nombre de fois que le microcontrôleur 38 a tenté d'atteindre la position cible P_{c}, et réagit en commandant l'application d'une impulsion I_{f}, de polarité inverse à celle des impulsions Iₐ, calibrée pour dispenser une énergie E égale à E_{fo}, correspondant à une valeur typique préétablie et choisie dans la mémoire 40. Cette impulsion I_{f} freine le rotor, de sorte qu'il s'arrête très rapidement. Dès l'impulsion terminée, la bobine est mise en court-circuit en 100, puis le microcontrôleur 38 vérifie que la roue 30 est arrêtée en 102. Tant que ce n'est pas le cas, le court-circuit est maintenu.

Durant toute la période de court-circuit, la roue commence par s'arrêter, puis se met à reculer sous l'effet de l'élasticité des composants de l'instrument et du liquide dispensé. Le recul peut être plus ou moins important selon les conditions de travail.

Lorsque la roue 30 est arrêtée, le microcontrôleur 38 vérifie que la position cible P_{c} n'est pas dépassée et que le nombre d'essais effectué n est inférieur à 4. Il incrémente ensuite de 1 la valeur de n et il détermine le nombre de pas effectués c.

A partir de ces informations, le microcontrôleur 38 détermine les valeurs de Iₚ et I_{f}, ainsi qu'un intervalle de temps .τ compris entre le passage par P_{c} et le début de l'impulsion I_{f}. Ces paramètres sont déterminés par extrapolation puis par l'expérimentation.

Après quoi, le programme reprend en 100 les opérations permettant de positionner la roue 30. Les étapes 100 à 106 sont répétées jusqu'à atteindre la position cible, mais au maximum un nombre déterminé de fois, typiquement 4, afin d'éviter que le programme reste en boucle en cas de disfonctionnement. L'opération se termine en 108, lorsque la cible a été atteinte ou que le nombre de tentatives de positionnement a atteint la limite admissible.

L'appareillage et le procédé mis en oeuvre au moyen de celui-ci, qui ont été décrits ci-dessus peuvent, bien entendu, avoir de nombreuses autres applications que de mouvoir le piston d'une seringue. Ils sont applicables dans toutes les situations où un déplacement doit se faire avec précision, pour un faible coût, spécialement lorsque la chaîne cinématique comprise entre le rotor et l'organe mobile présente une certaine élasticité mécanique.

On relèvera que le procédé décrit est particulièrement efficace et nécessite une puissance de calcul faible du fait que, lorsque le rotor travaille à grande vitesse, c'est à dire en phase rapide, le microcontrôleur effectue un nombre très limité de fonctions, alors que, durant la phase de positionnement, qui nécessite le plus grand nombre d'opérations, la plupart de celles-ci peuvent être réalisée le rotor étant à l'arrêt.

La mise en oeuvre du procédé selon l'invention nécessite la détermination des différents paramètres pris en compte. Cette détermination se fait essentiellement de manière empirique, au travers d'essais pratiques, durant lesquelles les différentes situations envisageables sont prises en compte.

On notera en outre que, si les valeurs mises en mémoire ne permettent pas d'atteindre la position cible, le microcontrôleur peut avantageusement informer la personne chargée de l'expérimentation, par un signal sonore ou par une information écrite, transmise au moyen de la borne de commande 42.

## Revendications

1. Procédé de commande d'un moteur à courant continu (10) du type comportant un rotor et un stator, un ensemble de bobines et un circuit magnétique, l'un solidaire du rotor, l'autre du stator, le rotor étant entraîné en rotation par le passage d'un courant électrique dans les bobines, et alimenté par un dispositif de commande (14) comportant:
- un détecteur de position (30, 32) coopérant avec le rotor,
- un circuit d'alimentation (34) pour appliquer aux bornes des bobines une tension d'alimentation destinée à engendrer le courant électrique, et
- un circuit de commande (36),
en vue de permettre à un organe mobile (24), mû par ledit moteur (10) et dont le mouvement est mesuré par ledit détecteur (30, 32), d'atteindre une position cible Pc définie par un nombre de pas d_{c} à parcourir,
**caractérisé en ce que**, durant une phase dite de positionnement, le circuit de commande (36), après avoir constaté que la position cible P_{c} a été atteinte, interrompt ledit courant et applique aux bobines une impulsion de freinage (I_{f}) de polarité inverse, puis court-circuite lesdites bobines jusqu'à l'arrêt constaté par ledit détecteur (30, 32).

2. Procédé selon la revendication 1, **caractérisé en ce que** le circuit de commande effectue les opérations suivantes durant la phase de positionnement:
- détermination du nombre de pas (d) à parcourir pour atteindre la position cible Pc ;
- détermination du nombre de pas parcourus (c) par l'application d'une impulsion (Iₐ) dispensant une énergie connue (Eₐ₀) ;
- détermination des énergies motrice (Eₚ) et de freinage (E_{f}) à fournir respectivement par une impulsion de positionnement (Iₚ) et par une impulsion de freinage (I_{f}) pour atteindre ladite position cible P_{c} ; et
- commande du circuit d'alimentation (34) pour qu'il applique audit moteur (10) les impulsions de positionnement (Iₚ) et de freinage (I_{f}) déterminées.

3. Procédé selon la revendication 2, **caractérisé en ce que** la détermination desdites énergies (Eₚ, E_{f}) se fait en sélectionnant, parmi un ensemble de solutions alternatives enregistrées en mémoire (40), celle présentant la plus grande probabilité de succès.

4. Procédé selon l'une des revendications 2 et 3, **caractérisé en ce que** les opérations effectuées durant la phase de positionnement sont répétées, la sélection des impulsions de positionnement (Iₚ) et de freinage (I_{f}) étant modifiée en fonction du résultat obtenu, jusqu'à atteindre ladite position cible P_{c}.

5. Procédé selon l'une des revendications 1 à 4, **caractérisé en ce que**, durant une phase dite d'approche, ledit circuit de commande (36) effectue les opérations suivantes, après que ledit détecteur a informé que ledit organe est immobile:
- détermination de la position de l'organe (24) en référence à la position cible Pc ;
- application d'une impulsion (la) dont l'énergie (Ea) est connue ;
- court-circuit des bobines jusqu'à l'arrêt dudit organe (24) ;
- détermination de la nouvelle position de l'organe ;
- calcul du nombre de pas (c) effectués par l'organe sous l'effet de ladite impulsion,
- calcul de l'énergie (E) devant être fournie pour permettre à l'organe d'atteindre la position cible P_{c} ;
- application d'une impulsion (Iₐ) dont l'énergie est plus petite que - ou égale à - celle calculée,
- court-circuit des bobines jusqu'à immobilité dudit organe (24), et
- si le détecteur (30, 32) indique un passage par la position cible P_{c}, application de la procédure de la phase de positionnement, si non reprise de la procédure de la phase d'approche.

6. Procédé selon l'une des revendications 1 à 5, **caractérisé en ce que**, préalablement à la phase d'approche et dans la mesure où le nombre de pas à effectuer d_{c} pour atteindre la position cible est supérieur à une valeur limite d_{I}, le circuit de commande (36) donne l'ordre audit circuit d'alimentation (34) d'alimenter le rotor en continu, à une tension calibrée U₁, et compte le nombre de pas (d) restant à parcourir sur la base des informations recueillies par ledit détecteur (30, 32).

7. Procédé selon la revendication 6, **caractérisé en ce que**, lorsque la vitesse du rotor (v) est constante, le circuit de commande (36) calcule, à partir de la vitesse atteinte (vₐ) , le nombre (N) de pas susceptibles d'être parcourus par l'organe avant qu'il ne s'arrête lorsque l'alimentation est interrompue et que les bobines sont court-circuitées, puis interrompt l'alimentation et court-circuite les bobines lorsque le nombre de pas (d) restant à parcourir atteint une valeur égale ou légèrement supérieure au nombre (N) calculé.

8. Procédé selon la revendication 7, **caractérisé en ce que** le circuit de commande (36) donne l'ordre au circuit d'alimentation (34) d'alimenter ledit moteur à une tension U₀, supérieure à U₁ et qui peut être égale à la tension nominale de la source d'énergie, lorsque le nombre de pas d_{c} est supérieur à une valeur limite d₀ et compte le nombre de pas restant à parcourir (d) jusqu'à ce qu'il soit sensiblement égal à d₀, le circuit de commande (36) amène la tension d'alimentation (U) à ladite tension calibrée (U₁).
